# EUROPÄISCHE PATENTANMELDUNG

(11) **EP 0 647 603 A1**
(43) Veröffentlichungstag der Anmeldung: **12.04.1995**
(21) Anmeldenummer: 94114683.9
(22) Anmeldetag: 17.09.1994
(51) Int. Cl.: C04B 38/00, C08J 9/00

(54) **Bauwerkstoff mit erhöhter Festigkeit**

(30) Priorität: 11.10.1993 CH 3046/93
(71) Anmelder: Fehlmann, Hans Beat, CH-6318 Walchwil (CH)
(72) Erfinder: Fehlmann, Hans Beat, CH-6318 Walchwil (CH)
(74) Vertreter: Troesch Scheidegger Werner AG

(57) **Zusammenfassung**

Um mittels eines Bau- oder Konstruktionswerkstoffes Formkörper oder Konstruktionselemente mit stark erhöhter Festigkeit herstellen zu können, wird vorgeschlagen, den Werkstoff mit einer weitgehendst gleichmässig verteilten feinstporigen Struktur bzw. einer microzellularen Struktur zu versehen. Die Feinstporen weisen dabei vorzugsweise einen Durchmesser im Bereich von ca. 0,01µ bis ca. 5µ auf und sind in sich geschlossen. Der Werkstoff umfasst dabei ein Reaktivbindemittel bzw. einen Reaktivmatrix-Werkstoff, wobei es sich beispielsweise um eine Zement/Wassermischung handeln kann oder aber auch um ein Kunstharz, wie Polyurethan, Epoxidharz und dergleichen.

## Beschreibung

Die vorliegende Erfindung betrifft einen Werkstoff, ein Bau- oder Konstruktionselement, im wesentlichen bestehend aus einem Werkstoff, ein Verfahren zur Herstellung eines Werkstoffes sowie die Verwendung des Werkstoffes zum Herstellen eines Formkörpers oder eines Bau- oder Konstruktionselementes.

Der wohl bekannteste und weitest verbreitete Konstruktions- und Bauwerkstoff, Beton, gilt mit einem Raumgewicht von etwa 2,4t/m³ als schwer und massig. Zudem weist Beton schlechte Isolationseigenschaften auf, was insbesondere im Wohnungsbau unerwünscht ist.

Es besteht eine Vielzahl von vorgeschlagenen Methoden, um einerseits die Dichte des Betons zu reduzieren und nach Möglichkeit gleichzeitig die isolierenden Eigenschaften zu verbessern.

So schlägt beispielsweise die GB-A-2 219 548 vor, dem Zement ein Schäumungsmittel zuzusetzen, um so einen sogenannten "zellenförmigen" Zement herzustellen, der wohl erhöhte Wärmeisolation ergibt, gleichzeitig aber muss eine Reduktion der Festigkeit in Kauf genommen werden.

Im US-Patent 4 040 855 wird die Herstellung eines Leichtbetons vorgeschlagen, indem ein lufteinschliessendes Additiv, wie beispielsweise geschäumtes Polystyrol, in den Beton eingearbeitet wird. Damit kann das Gewicht auf unter 1t/m³ reduziert werden, allerdings wiederum auf Kosten der Festigkeit.

Diese Technik wird auch in einer Reihe von Publikationen beschrieben, wie beispielsweise im Artikel von P. Cormon, "Bétons légers d'aujourd'hui", 1973, Editions Eyrolles, Paris, S. 156-166, sowie im Artikel in der Betonstein-Zeitung Nr. 5, 1. Mai 1960, S. 208-212: K. Kohling, "Die Herstellung von Leichtbeton unter Verwendung von vorexpandierten (R) Styropor-Partikeln als Zuschlagstoff".

Schliesslich wird in ähnlicher Art und Weise im kanadischen Patent Nr. 1 283 666 vorgeschlagen, in einen Leichtbeton Polystyrol einzuarbeiten, wobei zusätzlich z.B. Polypropylenfasern dem Beton zugegeben werden, um den Schwund beim Aushärten zu reduzieren.

Im Schweizer Patent Nr. 453 998 wird dem Nachteil der Reduktion der Festigkeit beim Einarbeiten von beispielsweise Styropor Rechnung getragen, indem hier anstelle davon als Füllstoffe z.B. Glasschaum, hergestellt beispielsweise aus Quarzsand und Soda, oder Blähgestein, wie Bims oder Tuff, zum Einarbeiten im Zement oder in ein Kunstharz vorgeschlagen wird.

Alle vorgeschlagenen Lösungen, wie das Schäumen von Zement bzw. Einschliessen von Gas in Baustoffe, das Einarbeiten von Leichtfüllstoffen, wie Styropor, oder auch die Verwendung von Glasschaum und dergleichen, haben nebst dem Vorteil des leichteren Betons den gewichtigen Nachteil der Festigkeitsabnahme. Diese muss insbesondere bei tragenden Bauelementen durch das Einbauen von schweren Armierungen, durch die Verwendung teurer Verstärkungen, wie Glas- oder Kohlenstoffasern, oder durch die Wahl dickerer Wandungen wenigstens teilweise kompensiert werden, was teuer und arbeitsintensiv ist. Zudem ist die Korrosions- und Rissanfälligkeit derartiger Bauteile stark erhöht.

Es ist daher eine Aufgabe der vorliegenden Erfindung, einen Bau- und Konstruktionswerkstoff bzw. ein Verfahren vorzuschlagen, mittels welchem Bau- oder Konstruktionsteile bzw. -elemente oder -werke erstellt werden können mit stark erhöhter Festigkeit.

Als Folgerung davon ist es eine weitere Aufgabe, in analoger Art und Weise einen Werkstoff vorzuschlagen, der trotz Verwendung von Leichtfüllstoffen eine ausreichende Festigkeit aufweist, um für die Herstellung von tragenden Bauteilen verwendet zu werden.

Erfindungsgemäss wird die gestellte Aufgabe mittels eines Werkstoffes nach dem Wortlaut von Anspruch 1 gelöst.

Vorgeschlagen wird, dass der erfindungsgemäss definierte Bau- bzw. Konstruktionswerkstoff durch eine weitgehendst gleichmässig verteilte, feinstporige Struktur charakterisiert ist.

Der Durchmesser dieser Feinstporen liegt im Bereich von ca. 0,01µm bis ca. 5µm, wobei die einzelnen Poren vorzugsweise in sich geschlossen sind.

Fur das Umhüllen dieser Poren bzw. zur Bildung einer Matrix beinhaltet der Werkstoff ein Reaktivbindemittel, wobei bei der Verwendung bzw. Anwendung des Werkstoffes eine chemische Verfestigungsreaktion stattfindet.

Durch die erwähnte Feinstporigkeit bzw. microzellulare Struktur kann mittels des erfindungsgemäss vorgeschlagenen Werkstoffes ein Formkörper bzw. ein Bau- oder Konstruktionselement erzeugt werden, dessen Druck- und Zugfestigkeit ca. das Drei- bis Vierfache von der entsprechenden Druck- bzw. Zugfestigkeit beträgt, die mittels des entsprechenden Bindemittels bzw. Werkstoffes ohne die Feinstporenstruktur erhalten wird. Es hat sich überraschenderweise gezeigt, dass durch das Einarbeiten der erwähnten Feinstporen offenbar infolge der sehr hohen Kapillarkräfte in den einzelnen Poren die Festigkeitseigenschaften des Bauwerkstoffes bzw. der daraus hergestellten Formkörper entscheidend erhöht werden können. Primär wird dabei die Zugfestigkeit erhöht, wobei dadurch automatisch ebenfalls die Druckfestigkeit zunimmt.

Auf diese Art und Weise ist es nun erfindungsgemäss möglich, in Betonteilen bzw. Bauteilen aus Beton ohne das Einbauen einer Armierung die Zugfestigkeit stark zu erhöhen.

Als Bindemittel bzw. Matrixwerkstoff im erfindungsgemäss vorgeschlagenen Werkstoff eignen sich insbesondere Kunstharze, wie Polyurethan, Epoxidharz, Polyesterharz, Siliconharz, Acrylharz und dergleichen, oder aber mineralische Werkstoffe, wie beispielsweise Zement.

Gemäss einer bevorzugten Ausführungsvariante wird als Werkstoff eine Zement/Wassermischung vorgeschlagen, wobei das Zement/Wasserverhältnis von ca. 0,24 bis ca. 0,4, vorzugsweise ca. 0,26 bis 0,32 beträgt.

Nebst diesem gewichtigen Vorteil, dass die Festigkeit eines aus dem erfindungsgemäss vorgeschlagenen Werkstoff hergestellten Bauteiles stark erhöht werden kann, kann das Gewicht je nach Porendurchmesser und Porenhäufigkeit bis zu ca. 30% reduziert werden. Daneben ergibt sich eine Reihe weiterer gewichtiger Vorteile:
- Auf die bis heute üblich zugesetzten, kostspieligen Zusatzstoffe auf Siliciumbasis zur Erhöhung der Festigkeit kann verzichtet werden.
- Auf die Zugabe von nicht tragenden Füllstoffen und insbesondere auf den Zusatz von Kies und Sand kann verzichtet werden, da die Zementmatrix selbst für die hohe Festigkeit verantwortlich ist.
- Da die Zementmatrix selbst eine wesentlich höhere Festigkeit aufweist als bei heute üblichen Bauteilen, können billige Leichtfüllstoffe, wie beispielsweise Styropor, zur Gewichtsreduktion dem geschlossenporigen Beton beigefügt werden zur Herstellung von Zementbauteilen mit einem Raumgewicht von ca. 600kg/m³. Trotzdem aber ist es möglich, mit derartigem Leichtfüllstoff-enthaltenden Beton tragende Bauteile herzustellen.
- Durch die Feinstporenstruktur wird der Beton "elastisch", d.h. der an sich sehr steife Beton mit einem E-Modul von ca. 25 bis 40kgN/mm² erhalt eine gewisse Elastizität, wobei der E-Modul auf bis zu 3,6kgN/mm² reduziert werden kann, ohne dass der Beton reissen würde. Dadurch wird es im Hochbau möglich, rissfreie Konstruktionen herzustellen.
- Durch die massiven Gewichtsersparnisse ist es beispielsweise beim Bau von Decken möglich, dickere Wandstärken zu wählen (höhere statische Höhe), wodurch die Armierung reduziert werden kann. Es ist so nur noch notwendig, eine Zusatzarmierung anzubringen zur Korrektur des E-Moduls, um ein Durchbiegen beispielsweise einer Deckenplatte zu verhindern. Aufgrund des wesentlich leichteren Baustoffes wird aber insgesamt weniger Armierung notwendig, wobei durchaus mit herkömmlichen Normen gerechnet werden darf.
- Durch die Porigkeit des erfindungsgemässen Werkstoffes, wie beispielsweise eines porigen Zementes, wird dieser leichter verarbeitbar, da die Poren wie "Kugellager" wirken. Zudem erhalt der Zement thixotrope Eigenschaften.
- Da beispielsweise der Zement thixotrop ist, kann mit einem wesentlich günstigeren Wasser/Zementverhältnis gearbeitet werden, d.h. es muss weniger Wasser zugesetzt werden, da der Werkstoff leichter verarbeitbar ist. Das Wasser/Zementverhältnis kann in einem Bereich von ca. 0,25 bis 0,4 gewählt werden, vorzugsweise 0,26 bis ungefähr 0,31.
- Da ein niedriger Wasser/Zementfaktor gewählt werden kann, wird praktisch alles "Anmachwasser" durch den Zement aufgenommen.
- Durch den niedrigen Wassergehalt im Baukörper wird dieser nach Abbinden bereits nach ca. einer Woche trocken.
- Da kein Ueberschusswasser vorhanden ist, ergeben sich keine offenen Kapillaren, d.h. der erfindungsgemäss erstellte Baukörper ist massiv. Bei Wasser/Zenentfaktoren von ungefähr 0,4 bis 0,55 ergeben sich offenporige Formkörper.
- Dadurch, dass keine offenen Kapillaren vorhanden sind, wird die Korrosionsbeständigkeit des Baukörpers stark erhöht. Somit können keine aggressiven Substanzen in den Baukörper eindringen, wie beispielsweise Tausalz oder andere aggressive Medien. Damit erhöht sich aber automatisch die Frostbeständigkeit.
- Betonbauwerke, hergestellt mit erfindungsgemäss definiertem Zement, sind sofort wieder "ausschalbar". Zudem schwindet der Beton bereits nach sieben Tagen nicht mehr, wobei zusätzlich insgesamt der Schwund wesentlich kleiner ist.
- Im Bau- bzw. Konstruktionswerkstoff findet keine Entmischung beim Zusetzen von Zuschlagstoffen statt.
- Durch die Verwendung des erfindungsgemäss definierten Bau- bzw. Konstruktionswerkstoffes ist es möglich, in Bau- bzw. Konstruktionsteilen Isolationswerte bzw. einen K-Wert zu erzeugen von 0,3(W/m² K) und besser.
- Inbesondere in Ländern, wo wenig oder kein Kies und Sand zur Verfügung steht, ist die Verwendung des erfindungsgemäss vorgeschlagenen Bau- und Konstruktionswerkstoffes vorteilhaft, da der Zusatz von Kies und Sand nicht notwendig ist. Dies gilt vor allem für Länder wie beispielsweise Japan oder für Regionen wie im Nahen Osten, wo kein salzfreier Sand oder Kies vorhanden ist.

Die Liste der Vorteile des erfindungsgemässen Werkstoffes umfasst nur die wichtigsten und ist nicht als abschliessend zu betrachten.

Weitere Ausführungsvarianten des erfindungsgemässen Bau- und Konstruktionswerkstoffes sind in den abhängigen Ansprüchen charakterisiert.

Die oben angeführten, erfindungsgemäss definierten Konstruktions- bzw. Bauwerkstoffe eignen sich insbesondere für die Herstellung von Bau- oder Konstruktionselementen bzw. -teilen sowie für ganze Bauwerke. Diese Bau- oder Konstruktionselemente können sowohl aufgrund der erhöhten Festigkeit des verwendeten Baumaterials unverstärkt sein oder aber zusätzlich verstärkt, beispielsweise durch eine innenliegend angeordnete Armierung, wie beispielsweise eine Eisenarmierung. Verstärkung ist aber auch möglich durch das Einbauen von Fasern, wie beispielsweise Glas- oder Kohlenstoffasern.

Es versteht sich von selbst, dass die erfindungsgemässe Idee des Einbauens einer feinstporigen Struktur in einen Werkstoff nicht auf hydraulische Bindemittel, wie beispielsweise Zement, beschränkt bleibt, sondern verwendbar ist auch in Kunstharzen, wie beispielsweise Polyurethan, Epoxidharze und dergleichen. Selbstverständlich sind auch Kombinationen möglich, indem beispielsweise im sog. Polymerbeton dem hydraulischen Bindemittel ein Kunstharz zugesetzt wird, beispielsweise zur Erhöhung der Festigkeit der herzustellenden Form- bzw. Baukörper.

Fur die Herstellung eines erfindungsgemäss definierten Bau- bzw. Konstruktionswerkstoffes wird ein Verfahren nach dem Wortlaut von Anspruch 14 oder 16 vorgeschlagen.

Entsprechend wird vorgeschlagen, ein reaktives Bindemittel bzw. die verschiedenen Reaktionskomponenten, gegebenenfalls zusammen mit Additiven und Zuschlagstoffen, in einem Hochturbulenzmischer zu mischen. Durch dieses Hochturbulenzmischen werden im Werkstoff die erfindungswesentlichen Feinstporen eingearbeitet, um die weitgehendst gleichmässig verteilte feinstporige Struktur zu schaffen.

Im Gegensatz zum Stand der Technik, wo Lufteinschlüsse und Poren beispielsweise in Zement bzw. Zement- oder Kunstharzmischungen durch Treibmittel, Schäumungszusätze, Aerosole, Schaumstoffe bzw. Leichtfüllstoffe eingeführt werden, erfolgt hier das Erzeugen der feinstporigen Struktur weitgehendst mittels eines Mischers. Der Unterschied zum Stand der Technik zeigt sich vor allem darin, dass im Stand der Technik wesentlich grössere Porendurchmesser bei Lufteinschlüssen gemessen werden, beispielsweise in der Grössenordnung von 100 bis 200µ, und geschlossenporige Einschlüsse von < 20µ werden in der Regel als ungünstig beurteilt, welche eben überraschenderweise für die erhöhten Festigkeitswerte verantwortlich sind.

Entsprechend einem weiteren erfindungsgemässen Verfahren zur Herstellung des erfindungsgemäss vorgeschlagenen Werkstoffes, beinhaltend die erfindungswesentliche feinstporige Struktur, ist es auch möglich, diese feinstporige Struktur in einem niedertourigen Mischer, wie einem herkömmlichen Zementmischer, zu erzeugen, indem der werkstofformulierung bis zu insgesamt ca. 1,5%, bezogen auf das Zementgewicht, an Additiven zugesetzt werden, wie beispielsweise Fliesseigenschaften fördernde Zusätze oder Verflüssigerzusätze, beispielsweise auf Ammoniakbasis. Auch das Zusetzen von Tensiden oder Thixotropiermitteln ist möglich, allerdings ist dabei darauf zu achten, dass die beim Mischen entstehenden Poren nicht zu gross werden, da, wie oben definiert, es erfindungswesentlich ist, dass die Porengrösse nicht grösser als 5µ ist. Eben bei den erfindungsgemäss definierten Kleinstporen stellen sich die hohen Kapillarkräfte ein, welche zur Erhöhung der Zug- und Druckfestigkeit in den Formkörpern bzw. Bauelementen führen.

Falls der werkstofformulierung Zuschlagstoffe beigemischt werden, wie beispielsweise Sand, Kies, Leichtfüllstoffe und dergleichen, ist es vorteilhaft, wenn sämtliche Komponenten der werkstofformulierung gleichzeitig entweder im Hochturbulenzmischer oder aber, wie gemäss der zweiten Verfahrensvariante, in einem normalen Mischer gemischt werden. Allerdings hat es sich beim Herstellen von Zementmischungen in einem hochtourigen Mischer als vorteilhaft erwiesen, wenn zunächst die Zement/Zuschlagstoffmischung niedertourig gemischt wird und das Wasser erst anschliessend im hochtourigen Mischbereich zugesetzt wird.

Beim Verarbeiten des erfindungsgemässen Bau- bzw. Konstruktionswerkstoffes ist darauf zu achten, dass die Temperatur beim Aushärtevorgang nicht zu hoch wird, d.h. dass sie nicht gegen einen Bereich ansteigt, wo eine der Komponenten des Werkstoffes zu verdampfen beginnt. Im Falle einer Wasser/Zementmischung sollte die Temperatur von beispielsweise max. 60°C bis 80°C nicht überschritten werden. Ansonsten, insbesondere in grossen zu giessenden Blöcken, sind beispielsweise Kühlschlangen einzubauen, um so zu hohe Reaktionstemperaturen auf die genannten Höchstwerte zu reduzieren. Auf der anderen Seite aber ist es insbesondere bei erfindungsgemässen Zementmischungen aufgrund des niedrigen Wassergehaltes möglich, beispielsweise auch bei Temperaturen unter 0°C zu betonieren, da die Abbindetemperatur grösser ist als die Abkühlung durch die Umgebung.

Aufgrund der vielfältigen, vollständig neuen Eigenschaften von erfindungsgemäss definierten Bau- und Konstruktionswerkstoffen ist es auch möglich, diese für an sich unübliche Verwendungszwecke vorzusehen. Ueberall dort, wo hohe Festigkeitswerte verlangt werden, kann beispielsweise mit einer reinen Zement/Wassermischung gearbeitet werden, ohne dass Armierungen oder zusätzliche Verstärkungen notwendig sind. Als Beispiel hierzu sei auf den Unterbau von Eisenbahnschienen verwiesen, wo erfindungsgemäss definierter Beton eine ausreichende Festigkeit aufweist, um auch den erhöhten Anforderungen bei den heute populären Hochgeschwindigkeitszügen zu genügen. Aber auch im Hochbau ist es so möglich, Decken herzustellen, wo allerhöchstens Armierungen gegen die Durchbiegung der Decke vorzusehen sind, nicht aber, um eine ausreichende Festigkeit zu ergeben.

Dasselbe gilt natürlich auch beim Einsatz von Kunstharzformulierungen, wo in der Regel erhöhte Festigkeit auf Kosten der Elastizität einherging. Um hohe Festigkeit in einem Formkörper zu erzielen, musste in der Regel die Vernetzungsdichte erhöht werden, oder aber es mussten teure Füllstoffe, wie Glasfasern, Kohlenstoffasern oder die heute populären Aramidfasern, eingebaut werden. Erhöhte Vernetzungsdichte führte aber in der Regel zu einer Erhöhung der Sprödigkeit.

Demgegenüber wird durch die feinstporige Struktur die Festigkeit erhöht, ohne Erhöhung der Vernetzungsdichte, wobei gleichzeitig die Elastizität im Formkörper noch erhöht wird. Dies ist ein vollständig neuer Aspekt, dass Druckfestigkeit erhöht wird, obwohl gleichzeitig die Elastizität erhöht werden kann. Damit können also beispielsweise verstärkte Kunststoffe hergestellt werden, bei welchen eine erfindungsgemäss hergestellte Matrix verwendet wird, die ohne Erhöhung der Vernetzungsdichte über eine erhöhte Festigkeit verfügt. Trotzdem aber weist die Matrix eine erhöhte Elastizität auf, wodurch die Sprödigkeit derartiger Werkstoffe stark reduziert werden kann. Vor allem im Fahrzeugbau, wie Automobilbau, wie auch in der Leichtbautechnik, wie beispielsweise in Flugzeugen, dürfte dies ein äusserst interessanter Aspekt sein.

Anhand einiger Beispiele soll die Erfindung anschliessend näher erläutert werden.

### Beispiel 1

### Zementformulierung:

100Gew% Zement werden mit 40Gew% Wasser gemischt, beispielsweise 20kg Zement mit 8kg Wasser. Die Mischung wird in einem Hochturbulenzmischer, wie beispielsweise einem Flügelmischer, bei 1500 Touren gemischt.

An aus dieser Formulierung gegossenen Formkörpern wurde eine Druckfestigkeit von 500 bis 700kg/cm² gemessen sowie eine Zugfestigkeit von 130 bis 160kg/cm².

### Beispiel 2

### Zement/Styropormischung:

Eine Formulierung von 100Gew% Zement und 30Gew% Wasser wurde mit einem Leichtfüllstoff, wie beispielsweise Styroporperlen, gemischt. Der Anteil an Leichtfüllstoff betrug dabei 950 l/m³ Zementformulierung. Weiter enthielt die Mischung insgesamt ca. 1% eines herkömmlichen Schaummittels, wie einer Seife bzw. einer höheren Fettsäure, und eines Verflüssigers auf Ammoniakbasis.

Die Mischung wurde in einem herkömmlichen Zementmischer bei ca. 20 Touren gemischt und anschliessend Formkörper gegossen. An diesen wurde ein Raumgewicht von 900kg/m³ ermittelt.

| | |
|---|---|
| Druckfestigkeit ungefähr | 85kg/cm², |
| Zugfestigkeit ungefähr | 32kg/cm². |

Mit der gleichen Rezeptur, jedoch ohne Schaummittelzusatz und ohne Verflüssiger, wurden Mischungen in demselben Beton- bzw. Zementmischer hergestellt und anschliessend Formkörper gegossen, an welchen praktisch keine Festigkeit gemessen werden konnte, da die microzellulare Struktur in der Zementmatrix fehlte.

Insbesondere der gemäss Beispiel 2 hergestellte Leicht-Bauwerkstoff eignet sich besonders für die Herstellung von sogenannten vorfabrizierten Bauelementen bzw. Bauteilen, wie beispielsweise für die Herstellung von Zementbausteinen. Dabei kann es sich sowohl um massive bzw. kompakte Zementbausteine handeln, welche durch Giessen der fliessfähigen Formulierung in eine hohlförmige, quadratische oder rechteckige Giessform gefertigt werden können. Durch das zwei- oder mehrteilige Ausgestalten der Giessform und Einbauen von innenliegenden Einschlusskörpern können auch Betonsteine der bekannten Art gegossen werden, beinhaltend Hohlräume bzw. Lufteinschlüsse. Dabei können die Betonsteine entsprechend den landesspezifischen Normen gegossen werden.

Derartig hergestellte Betonsteine, beinnaltend z.B. die Formulierung nach Beispiel 2, weisen den grossen Vorteil auf, dass sie gegenüber herkömmlichen Betonsandsteinen wesentlich leichter sind, trotzdem aber mindestens die gleiche Festigkeit aufweisen und zudem wärmeisolierend wirken. Derartige Betonsteine, beinhaltend die Formulierung nach Beispiel 2, weisen einen λ-Wert (Wärmeleitzahl) auf von ca. 0,1 bis 0,2W/mK. Somit ist es also möglich, mit derartigen erfindungsgemässen Betonsteinen Mauerwerke zu erstellen, welche die erforderliche Festigkeit und den erforderlichen Wärmeisolationswert aufweisen, ohne dass teure und aufwendige Doppelschalen-Mauerwerke erstellt werden müssen. Damit entfällt aber auch die Notwendigkeit des Anbringens einer äusseren Isolationsschicht.

Ein weiterer Vorteil beim Herstellen von sogenannten vorfabrizierten Betonsteinen liegt darin, dass insbesondere bei einem sehr niedrigen Zement/Wasserfaktor von ca. 0,26% nach Einfüllen des erfindungsgemäss hergestellten Betons und kurzem Vibrieren Formkörper hergestellt werden können, welche bereits nach sehr kurzer Zeit eine gewisse Festigkeit aufweisen, dass ein sofortiges Ausschalen möglich ist. Aufgrund dieser sogenannten Frühfestigkeit des Betons können derartige vorfabrizierte Betonsteine wesentlich rascher hergestellt werden als bei Verwendung von herkömmlichem Zement, nicht beinhaltend die erfindungsgemässe microzellulare Struktur.

Die Liste möglicher geeigneter Anwendungen von erfindungsgemäss definierten Bau- bzw. Konstruktionswerkstoffen ist unerschöpflich und deshalb nicht auf die oben erwähnten Beispiele zu beschränken. Diese dienen einzig dazu, die Eigenschaften der erfindungsgemässen Bau- bzw. Konstruktionswerkstoffe näher darzulegen und die Erfindung näher zu erläutern.

## Patentansprüche

1. Bau- und Konstruktionswerkstoff, gekennzeichnet durch eine weitgehendst gleicbmässig verteilte feinstporige Struktur.

2. Werkstoff, insbesondere nach Anspruch 1, dadurch gekennzeichnet, dass die Feinstporen einen Durchmesser im Bereich von ca. 0,01µ bis ca. 5µ aufweisen und in sich geschlossen sind.

3. Werkstoff, insbesondere nach einem der Ansprüche 1 oder 2, dadurch gekennzeichnet, dass der Werkstoff ein Reaktivbindemittel bzw. einen Reaktivmatrix-Werkstoff beinhaltet, bei dessen Verwendung bzw. Anwendung eine chemische Verfestigungsreaktion stattfindet.

4. Werkstoff, insbesondere nach Anspruch 3, dadurch gekennzeichnet, dass als Bindemittel bzw. Matrixwerkstoff ein Kunstharz, wie Polyurethan, Epoxidharz, Polyesterharz, Siliconharz, Acrylharz und dergleichen, vorliegt oder ein mineralischer Werkstoff, wie Zement.

5. Werkstoff, insbesondere nach einem der Ansprüche 1 bis 4, dadurch gekennzeichnet, dass der Werkstoff eine Zement/Wassermischung beinhaltet, wobei das Zement/Wasserverhältnis ca. 0,24 bis ca. 0,4, vorzugsweise ca. 0,26 bis 0,31, beträgt.

6. Werkstoff, insbesondere nach einem der Ansprüche 1 bis 5, dadurch gekennzeichnet, dass mindestens ein einen Feinstschaum bildendes Additiv, wie beispielsweise ein Tensid bzw. eine Seife, und/oder ein die Fliesseigenschaften förderndes Additiv, wie ein Verflüssigerzusatz, beispielsweise auf Ammoniakbasis, und/oder ein Thixotropiermittel vorliegt.

7. Werkstoff, insbesondere nach einem der Ansprüche 1 bis 6, dadurch gekennzeichnet, dass der Werkstoff weiter einen Leichtfüllstoff umfasst, der weitgehendst gleichmässig verteilt ist und dessen Dichte wesentlich kleiner ist als die Dichte des Bindemittels bzw. des Matrixwerkstoffes, vorzugsweise kleiner als 0,1g/cm³.

8. Werkstoff, insbesondere nach einem der Ansprüche 1 bis 7, dadurch gekennzeichnet, dass der Werkstoff einen Verstärkungsfüllstoff umfasst, wie beispielsweise Glasfasern, Kohlenstofffasern, Aramidfasern und dergleichen.

9. Werkstoff, insbesondere nach einem der Ansprüche 1 bis 8, dadurch gekennzeichnet, dass Kies und/oder Sand als Füllstoff vorliegt.

10. Bau- oder Konstruktionselement, im wesentlichen bestehend aus einem Werkstoff, insbesondere nach einem der Ansprüche 1 bis 9.

11. Element, insbesondere nach Anspruch 10, gekennzeichnet durch eine innenliegend angeordnete Armierung, wie beispielsweise eine Eisenarmierung.

12. Verwendung des Werkstoffes, insbesondere nach einem der Ansprüche 1 bis 9, zum Herstellen eines Formkörpers oder eines Bau- oder Konstruktionselementes, dadurch gekennzeichnet, dass der Werkstoff in eine Form oder eine Schalung eingegeben oder eingegossen wird und nach dem Entstarren oder Aushärten ausgeformt bzw. ausgeschalt wird.

13. Verwendung, insbesondere nach Anspruch 12, dadurch gekennzeichnet, dass in der Form bzw. in der Schalung Kühlelemente vorgesehen sind, um beim Aushärten des Werkstoffes in der Form bzw. in der Schalung die Reaktionstemperatur auf max. ca. 60°C bis 70°C zu begrenzen.

14. Verfahren zur Herstellung eines Werkstoffes, insbesondere nach einem der Ansprüche 1 bis 9, dadurch gekennzeichnet, dass ein Bindemittel bzw. ein Matrixwerkstoff gegebenenfalls zusammen mit Zuschlagstoffen und/oder Additiven in einem Hochturbulenzmischer gemischt wird, um anschliessend als erfindungsgemässer Werkstoff verarbeitet werden zu können.

15. Verfahren, insbesondere nach Anspruch 14, dadurch gekennzeichnet, dass Zement und Wasser und gegebenenfalls weitere Zuschlagstoffe und Additive mit einem Wasser/Zementverhältnis von ca. 0,24 bis ca. 0,40, vorzugsweise 0,26 bis 0,31, im Hochturbulenzmischer gemischt werden.

16. Verfahren zur Herstellung eines Werkstoffes, insbesondere nach einem der Ansprüche 1 bis 9, dadurch gekennzeichnet, dass ein Bindemittel bzw. ein eine Matrix bildender Werkstoff zusammen mit mindestens einem einen Feinstschaum bildenden Additiv, wie beispielsweise ein Tensid, und/oder zusammen mit einem die Fliesseigenschaften fördernden Additiv, wie ein Verflüssigerzusatz, und/oder zusammen mit weiteren Zuschlagstoffen und Additiven in einem herkömmlichen nieder- oder hochtourigen Mischer gemischt wird.
